# FASCICULE DE BREVET EUROPEEN

(11) **EP 3 692 011 B1**
(45) Date de publication et mention de la délivrance du brevet: **18.08.2021**
(21) Numéro de dépôt: 18799576.6
(22) Date de dépôt: 03.10.2018
(51) Int. Cl.: C04B 41/00, C04B 41/52, C04B 41/89, C23C 28/04, C23C 4/10, F01D 5/28

(54) **PIÈCE PROTÉGÉE PAR UNE BARRIÈRE ENVIRONNEMENTALE**
DURCH EINE UMWELTSPERRE GESCHÜTZTE KOMPONENTE
COMPONENT PROTECTED BY AN ENVIRONMENTAL BARRIER

(30) Priorité: 05.10.2017 FR 1759326
(43) Date de publication de la demande: 12.08.2020
(73) Titulaire: SAFRAN, 75015 Paris (FR)
(72) Inventeur: BIANCHI, Luc, 77550 Moissy-Cramayel (FR); JOUBERT, Hugues, Denis, 77550 Moissy-Cramayel (FR); PICOT, Philippe, 77550 Moissy-Cramayel (FR); SABOUNDJI, Amar, 77550 Moissy-Cramayel (FR)
(74) Mandataire: Cabinet Beau de Loménie
(86) Numéro de dépôt international: PCT/FR2018/052439
(87) Numéro de publication internationale: WO 2019/069023

(56) Documents cités:
- EP-A1- 2 189 504
- EP-A1- 2 918 698
- Willy Kunz ET AL: "Self-healing EBC material for gas turbine applications" In: "Advances in High Temperature Ceramic Matrix Composites and Materials for Sustainable Development; Ceramic Transactions, Volume CCLXIII", 10 mai 2017 (2017-05-10), The American Ceramic Society, XP055477677, ISBN: 978-1-119-40643-3 pages 173-185, DOI: 10.1002/9781119407270.ch18, "Introduction"; "Conclusion"; figure 1
- Z DERELIOGLU ET AL: "Healing particles in self-healing thermal barrier coatings", ICSHM 2013: PROCEEDINGS OF THE 4TH INTERNATIONAL CONFERENCE ON SELF-HEALING MATERIALS, GHENT, BELGIUM, 16-20 JUNE 2013, 16 juin 2013 (2013-06-16), XP055477690,
- PETER GREIL: "Generic principles of crack-healing ceramics", JOURNAL OF ADVANCED CERAMICS, vol. 1, no. 4, décembre 2012 (2012-12), pages 249-267, XP055477992, ISSN: 2226-4108, DOI: 10.1007/s40145-012-0020-2

## Description

### Arrière-plan de l'invention

La présente invention se rapporte au domaine général de la protection contre la corrosion de pièces en matériau composite à matrice céramique (CMC).

Un domaine particulier d'application de l'invention est la protection de pièces en matériau composite à matrice céramique (CMC) formant des parties chaudes de turbines à gaz, telles que des parois de chambre de combustion, ou des anneaux de turbine, des distributeurs de turbine ou des aubes de turbines, pour des moteurs aéronautiques ou des turbines industrielles.

Pour de telles turbines à gaz, le souci d'améliorer le rendement et de réduire les émissions polluantes conduit à envisager des températures toujours plus élevées dans les chambres de combustion.

Il a donc été proposé de remplacer les matériaux métalliques par des matériaux CMC, notamment pour des parois de chambres de combustion ou anneaux de turbine. En effet, les matériaux CMC sont connus pour posséder à la fois de bonnes propriétés mécaniques permettant leur utilisation pour des éléments de structure et la capacité de conserver ces propriétés à des températures élevées. Les matériaux CMC comportent un renfort fibreux en fibres réfractaires, typiquement en carbone ou en céramique, qui est densifié par une matrice céramique, par exemple en SiC.

Dans les conditions de fonctionnement des turbines aéronautiques, c'est-à-dire à haute température sous atmosphère oxydante et humide, les matériaux CMC sont sensibles au phénomène de corrosion. La corrosion du CMC résulte de l'oxydation du SiC en silice qui, en présence de vapeur de d'eau, se volatilise sous forme d'hydroxydes de silicium Si(OH)₄. Les phénomènes de corrosion entraînent une récession du CMC et affectent la durée de vie de ce dernier.

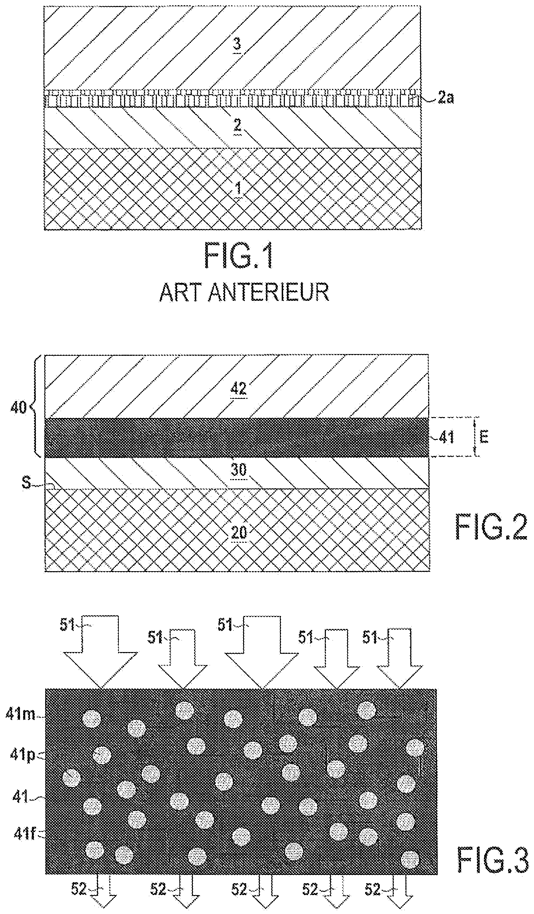

Afin de limiter cette dégradation en fonctionnement, il a été envisagé de former à la surface des matériaux CMC des revêtements de barrière environnementale. Une telle solution de l'état de la technique est illustrée à la figure 1.

Ainsi, comme illustré à la figure 1, un substrat 1 en matériau composite à matrice céramique (CMC) est recouvert d'une couche de liaison 2 en silicium, ladite couche de liaison 2 étant elle-même recouverte par une barrière environnementale 3 qui peut être une couche de silicate de terre rare. Lors du fonctionnement de la turbomachine, une couche de silice protectrice 2a se forme entre la couche de liaison 2 en silicium et la barrière environnementale 3.

La couche de liaison 2 permet, d'une part, d'améliorer l'accroche de la barrière environnementale 3 et, d'autre part, de former en fonctionnement la couche de silice protectrice 2a, dont la faible perméabilité à l'oxygène participe à la protection du substrat 1 en CMC contre l'oxydation.

La barrière environnementale 3 permet, quant à elle, de limiter la diffusion de la vapeur d'eau vers la couche de silice protectrice 2a formée par oxydation du silicium de la couche de liaison 2, et par conséquent de limiter la récession de celle-ci.

Cependant, un problème rencontré par cette solution de l'état de la technique est que l'accessibilité de la couche de silice protectrice 2a à la vapeur d'eau et à l'air est localement très variable.

Ces différences d'accessibilité locales proviennent notamment à cause de différences locales de densité de la barrière environnementale 3, de la tortuosité du réseau de microfissures et de porosités dans la barrière environnementale 3 responsables de cheminements privilégiés pour l'oxygène, et d'hétérogénéités locales de composition ou dans le réseau cristallin de la barrière environnementale 3.

Ces différences d'accessibilité locales peuvent induire des différences locales d'épaisseur dans la couche de silice protectrice 2a potentiellement responsables d'accumulation de contraintes et d'une détérioration prématurée de la pièce par délamination.

L'article "Self-healing EBC material for gas turbine applications" de Willy Kunz ET AL ("Advances in High Temperature Ceramic Matrix Composites and Materials for Sustainable Development; Ceramic Transactions, Volume CCLXIII", 2017, The American Ceramic) décrit un matériau de revêtement de barrière environnementale auto-cicatrisant pour des turbines à gaz composé de mono-silicate d'ytterbium dans lequel des particules de carbure de silicium sont dispersées.

Le document EP2918698A1 divulgue une couche hermétique à base de silicate de terre rare appliquée par pulvérisation thermique sur une sous-couche d'accrochage incluant du silicium pour former une barrière environnementale sur des matériaux composites à matrice céramique.

Il existe donc un besoin pour disposer d'un nouveau système de protection d'un substrat en CMC contre la corrosion, d'augmenter la durée de vie en fonctionnement des pièces en CMC.

### Objet et résumé de l'invention

La présente invention a donc pour but principal de pallier de tels inconvénients en proposant une pièce comprenant :
- un substrat dont au moins une partie adjacente à une surface du substrat est en un matériau comprenant du silicium ;
- une sous-couche d'accrochage située sur la surface du substrat et comprenant du silicium,
- une barrière environnementale qui comprend une couche externe en céramique recouvrant la sous-couche d'accrochage,
ladite barrière environnementale comprenant en outre une couche interne auto-cicatrisante située entre la sous-couche d'accrochage et la couche externe, ladite couche interne comprenant une matrice dans laquelle sont dispersées des particules silico-formeuses, ces particules étant aptes à générer une phase de cicatrisation de fissures de la matrice en présence d'oxygène.

Une telle couche interne de barrière environnementale offre l'avantage d'une part de réduire la quantité d'eau et d'air arrivant jusqu'à la sous-couche d'accrochage, et d'autre part de réduire l'hétérogénéité dans la quantité d'eau et d'air traversant la barrière environnementale.

En effet, les particules étant silico-formeuses, c'est-à-dire de nature à former de la silice (SiO₂) lorsqu'elles sont oxydées, lesdites particules dispersées dans la matrice de la couche interne réagissent au contact de l'oxygène pour générer une phase de cicatrisation qui vient étanchéifier ladite couche interne. Les particules comprennent du silicium.

De plus, une telle réaction des particules avec l'oxygène vient consommer une partie de l'eau et de l'air traversant la couche interne de la barrière environnementale, ce qui limite la quantité d'air et d'eau transmise à la sous-couche d'accrochage et réduit les hétérogénéités.

Par ailleurs, les particules de la couche interne peuvent comprendre des particules céramiques, préférentiellement des particules de carbure de silicium, ou de nitrure de silicium, ou d'une phase MAX comprenant du silicium, ou un mélange de telles particules.

Les particules de la couche interne peuvent également comprendre des particules métalliques, préférentiellement des particules de silicium élément Si, ou d'un siliciure métallique, ou un mélange de telles particules.

Selon une caractéristique possible, les particules de la couche interne ont une taille moyenne inférieure ou égale à 5µm, et préférentiellement inférieure ou égale à 2µm.

Par « taille moyenne » on désigne la dimension donnée par la distribution granulométrique statistique à la moitié de la population, dite D50.

De plus, la couche interne comprend un taux de charge volumique de particules compris entre 20% et 40%.

Selon une caractéristique additionnelle, la couche interne possède une épaisseur comprise entre 10µm et 300µm, et préférentiellement entre 100µm et 200µm.

La matrice de la couche interne peut par ailleurs être en silicate, préférentiellement un monosilicate ou un disilicate de terre rare, ou un aluminosilicate comme la mullite, ou de la cordiérite.

Selon une autre caractéristique, la matrice de la couche interne et la couche externe sont formées du même matériau.

Selon un deuxième aspect, l'invention propose un procédé de fabrication d'une pièce selon l'une quelconque des caractéristiques précédentes, comprenant les étapes suivantes :
- dépôt de la sous-couche d'accrochage comprenant du silicium sur la surface du substrat ;
- dépôt de la couche interne de la barrière environnementale sur la sous-couche d'accrochage ;
- dépôt de la couche externe de la barrière environnementale sur la couche interne, ladite couche externe étant en céramique.

Selon une caractéristique supplémentaire, le dépôt de la couche interne est réalisé par projection plasma dans laquelle un matériau destiné à former les particules est introduit dans un jet de plasma sous la forme d'une suspension en milieu liquide.

Par ailleurs, un matériau destiné à former la matrice de la couche interne est introduit dans le jet plasma sous forme de poudre.

Selon une autre caractéristique, le matériau destiné à former la matrice de la couche interne est introduit dans le jet plasma sous la forme d'une suspension en milieu liquide.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente une solution de barrière environnementale selon l'état de la technique ;
- la figure 2 représente une vue en coupe d'une pièce selon un mode de réalisation de l'invention ;
- la figure 3 représente une vue détaillée de la couche interne de la barrière environnementale ;
- la figure 4 représente un premier mode de réalisation possible pour le dépôt de la couche interne de la barrière environnementale ;
- la figure 5 représente un deuxième mode de réalisation possible pour le dépôt de la couche interne de la barrière environnementale ;
- la figure 6 représente un troisième mode de réalisation possible pour le dépôt de la couche interne de la barrière environnementale ;
- la figure 7 représente schématiquement les différentes étapes d'un procédé de fabrication selon une mise en œuvre de l'invention.

### Description détaillée de l'invention

Dans la description détaillée qui suit, on envisage la formation d'une barrière environnementale sur un substrat en matériau CMC contenant du silicium. L'invention est toutefois applicable à des substrats en matériau réfractaire monolithique contenant du silicium et, plus généralement, à des substrats dont au moins une partie adjacente à une surface externe du substrat est en un matériau réfractaire (composite ou monolithique) contenant du silicium. Ainsi, l'invention vise notamment la protection de matériaux réfractaires constitués par des céramiques monolithiques, par exemple en carbure de silicium SiC ou nitrure de silicium Si₃N₄, mais plus particulièrement la protection de matériaux composites réfractaires tels que des matériaux composites à matrice céramique (CMC) contenant du silicium, par exemple des CMC à matrice au moins partiellement en SiC.

Comme illustré à la figure 2, une pièce 10 selon l'invention comprend un substrat 20 comprenant une surface S. Le substrat 20 comprend du silicium sur au moins une partie adjacente à la surface S. La pièce 10 peut typiquement être un anneau de turbine d'une turbomachine.

Le substrat 20 peut être en un matériau CMC contenant du silicium et qui comprend un renfort fibreux pouvant être en fibres de carbone (C) ou en fibres céramiques, par exemple en fibres de SiC ou formées essentiellement de SiC, incluant des fibres en Si-C-O ou Si-C-O-N, c'est-à-dire contenant aussi de l'oxygène et éventuellement de l'azote. De telles fibres sont produites par la société Nippon Carbon sous la référence « Nicalon » ou « Hi-Nicalon » ou « Hi-Nicalon Type-S », ou par la société Ube Industries sous la référence « Tyranno-ZMI ». Les fibres céramiques peuvent être revêtues d'une mince couche d'interphase en carbone pyrolytique (PyC), en nitrure de bore (BN) ou en carbone dopé au bore (BC, avec 5%at. à 20%at. de B, le complément étant C).

Le renfort fibreux est densifié par une matrice qui est formée, dans son intégralité ou au moins dans une phase externe de celle-ci, par un matériau contenant du silicium, tel qu'un composé du silicium, par exemple SiC ou un système ternaire Si-B-C. Par phase externe de matrice, on entend une phase de matrice formée en dernier, la plus éloignée des fibres du renfort. Ainsi, la matrice peut être formée de plusieurs phases de natures différentes, et peut par exemple être :
une matrice mixte C-SiC (le SiC étant du côté externe), ou
une matrice séquencée avec une alternance de phases SiC et de phases de matrice de moindre rigidité, par exemple en carbone pyrolytique (PyC), nitrure de bore (BN) ou carbone dopé au bore (BC), avec une phase terminale de matrice en SiC, ou
une matrice auto-cicatrisante avec des phases de matrice en carbure de bore (B₄C) ou en un système ternaire Si-B-C, éventuellement avec carbone libre (B₄C + C, Si-B-C + C), et avec une phase terminale Si-B-C ou SiC.

La matrice peut être au moins en partie formée par CVI de manière connue en soi. En variante, la matrice peut être au moins en partie formée par voie liquide (imprégnation par une résine précurseur de la matrice et transformation par réticulation et pyrolyse, le processus pouvant être répété) ou par infiltration de silicium à l'état fondu (procédé de « Melt-Infiltration »). Dans ce dernier cas, une poudre est introduite dans le renfort fibreux éventuellement partiellement densifié, cette poudre pouvant être une poudre de carbone et éventuellement de céramique, et une composition métallique à base de silicium à l'état fondu est ensuite infiltrée pour former une matrice de type SiC-Si.

Une sous-couche d'accrochage 30 comprenant du silicium est située sur le substrat 20. La sous-couche d'accrochage 30 est en contact avec le substrat 20. La sous-couche d'accrochage 30 peut typiquement être du silicium (élément Si), ou de la mullite (3Al2O3.2SiO2). En fonctionnement, la sous-couche d'accrochage 30 va s'oxyder et former une couche passivante de silice (SiO₂) (« Thermally Grown Oxide »).

Une barrière environnementale 40 est située sur la sous-couche d'accrochage 30 afin de protéger ladite sous-couche d'accrochage 30 et le substrat 20. La barrière environnementale 40 comprend une couche interne 41 auto-cicatrisante située sur la sous-couche d'accrochage 30, et une couche externe 42 en céramique située sur la couche interne 41. La couche interne 41 est en contact d'une part avec la sous-couche d'accrochage 30 et d'autre part avec la couche externe 42.

Par matériau autocicatrisant, on entend ici un matériau formant, en présence d'oxygène, une composition vitreuse capable, par passage à l'état pâteux ou fluide dans un certain domaine de températures, de cicatriser des fissures apparues au sein du matériau.

Comme visible sur la figure 3, la couche interne 41 comprend une matrice 41m dans laquelle sont dispersés des particules 41p. La matrice 41m est en un matériau différent du matériau des particules 41p. Par ailleurs, la matrice 41m comprend des fissures 41f et autres porosités.

Les particules 41p sont des particules silico-formeuses, et donc qui sont aptes à générer une phase de cicatrisation des fissures 41f de la matrice 41m en présence d'oxygène. Les particules 41p sont notamment adaptées pour générer la phase de cicatrisation lorsque la température est supérieure à 800°C. Les particules 41p comprennent du silicium.

En effet, en fonctionnement, des flux d'air et d'eau 51 traversent la couche externe 42 de la barrière environnementale 40, et arrivent à la couche interne 41 de ladite barrière environnementale 40. Les particules 41p étant silico-formeuses, elles réagissent avec l'oxygène et forment de la silice (SiO₂). Cette silice générée par les particules 41p forme la phase cicatrisante et remplit par capillarité les fissures 41f et autres porosités de la matrice 41m, étanchéifiant ainsi la couche interne 41 en limitant la circulation des flux d'air et d'eau 51 au travers de ladite couche interne 41. Une telle réaction auto-cicatrisante de la couche interne 41 permet, qu'au contact des flux d'air et d'eau 51, ladite couche interne 41 s'étanchéifie, réduisant ainsi la quantité d'air et d'eau qui atteint la sous-couche d'accrochage 30 via les flux sortant 52.

Par ailleurs, en plus d'étanchéifier la couche interne 41 par remplissage des fissures 41f, un tel effet auto-cicatrisant permet de consommer une partie de l'eau et de l'air, réduisant ainsi d'autant plus la quantité d'air et d'eau dans les flux sortant 52 qui atteignent la sous-couche d'accrochage 30.

De plus, comme cela est illustré sur la figure 3, la quantité d'air et d'eau est hétérogène dans les flux 51 qui arrivent sur la couche interne 41. Le fait qu'une partie de l'eau et de l'air soit consommée par la réaction des particules 41p permet d'homogénéiser les flux sortant 52 d'air et d'eau qui arrivent sur la sous-couche d'accrochage 30. Une telle homogénéisation des flux sortant 52 permet de réduire les différences locales d'épaisseur dans la couche de silice protectrice générée par la sous-couche d'accrochage 30, réduisant ainsi le risque d'accumulation de contraintes et de détérioration prématurée de la pièce 10 par délamination.

Par ailleurs, en plus de la réaction d'oxydation, les particules 41p peuvent se corroder en présence de l'eau et de l'air, et générer du HₓSi_{y}O_{z} gazeux. Une telle réaction de corrosion des particules 41p permet également de consommer de l'eau et de l'air, réduisant ainsi la quantité d'eau et d'air arrivant sur la sous-couche d'accrochage 30.

Les particules 41p peuvent être des particules céramiques. Les particules 41p sont préférentiellement être des particules de carbure de silicium (SiC), des particules de nitrure de silicium (Si₃N₄), ou des particules d'une phase max comprenant du silicium, ou un mélange de telles particules. Le carbure de silicium fait notamment partie des matériaux préférés.

Les particules 41p peuvent également être des particules métalliques. Les particules 41p sont préférentiellement des particules de silicium (élément Si), des particules d'un siliciure métallique, ou un mélange de telles particules.

Les particules 41p ont de préférence une taille moyenne (D50) qui est inférieure ou égale à 5µm. Il est en effet avantageux que les particules 41p possèdent une taille moyenne inférieure ou égale à 5µm car cela permet à la couche interne 41 d'être plus réactive pour la génération de la phase cicatrisante en SiO₂ et pour la consommation de l'air et de l'eau. En effet, l'utilisation de particules de faible taille permet d'augmenter la surface disponible pour la réaction d'oxydation et de corrosion des particules 41p. De préférence, les particules 41p possèdent une taille moyenne inférieure ou égale à 2µm, par exemple comprise entre 0,1µm et 2µm, afin d'augmenter encore plus la réactivité et l'efficacité de la couche interne 41.

Comme cela sera décrit par la suite, l'utilisation de particules possédant une taille inférieure à 5µm est permise notamment par un dépôt par projection plasma où le matériau destiné à former les particules 41p est introduit pas voie liquide.

La couche interne 41 comprend un taux de charge volumique de particules 41p compris entre 20% et 40%. Cela permet d'une part d'assurer une meilleure réactivité de la couche interne 41 pour la génération de la phase de cicatrisation et la consommation d'eau et d'air ainsi que d'assurer une durée de vie suffisante à la couche interne 41, et d'autre part de garder de manière suffisante les propriétés apportées par la matrice 41m.

La matrice 41m est avantageusement en silicate, et préférentiellement un monosilicate ou un disilicate de terre rare, ou un aluminosilicate comme la mullite, ou de la cordiérite. Il est à noter que de préférence la matrice 41m n'est pas en aluminosilicate de baryum et de strontium (BSAS), car le BSAS réagit avec la silice. Une matrice 41m en monosilicate ou en disilicate de terre rare est un mode de réalisation préféré. Une matrice 41m en Y₂Si₂O₇, RE₂Si₂O₇, ou en RE₂SiO₅ sont des variantes préférées du mode de réalisation selon lequel la matrice 41m est en monosilicate ou en disilicate de terre rare.

La couche interne 41 possède une épaisseur E qui peut être comprise entre 10µm et 300µm. Une telle épaisseur permet à la couche interne 41 d'assurer son rôle de protection de la sous-couche d'accrochage 30. De plus, lorsque la couche interne 41 possède une épaisseur importante, par exemple entre 200µm et 300µm, elle peut assurer à elle seule la fonction d'étanchéisation contre l'eau et l'air de la barrière environnementale 40, la couche supérieure 40 pouvant alors remplir uniquement le rôle d'abradable. Par ailleurs, l'épaisseur E de la couche interne 41 est préférentiellement comprise entre 100µm et 200µm.

La couche externe 42 de la barrière environnementale 40 est en céramique. La couche externe 42 peut être une couche classique de barrière environnementale. La couche externe 42 peut être un monosilicate ou un disilicate de terre rare, ou un aluminosilicate comme la mullite ou de l'aluminosilicate de baryum et de strontium (BSAS), ou encore de la cordiérite.

De préférence, afin d'assurer une meilleure compatibilité mécanique et chimique entre la couche interne 41 et la couche externe 42 de la barrière environnementale 40, la matrice 41m de la couche interne 41 et la couche externe 42 sont formées du même matériau. Une telle caractéristique est d'autant plus avantageuse lorsque la couche interne 41 et la couche externe 42 sont directement en contact l'une avec l'autre. De manière préférentielle, la matrice 41m de la couche interne 41 et la couche externe 42 sont en monosilicate ou en disilicate de terre rare. Par ailleurs, la couche externe 42 peut être chargée de fibres ou d'inclusions suivant les propriétés voulant être données à ladite couche externe 42.

La barrière environnementale 40 peut également comprendre des couches supplémentaires situées sur la couche externe 42.

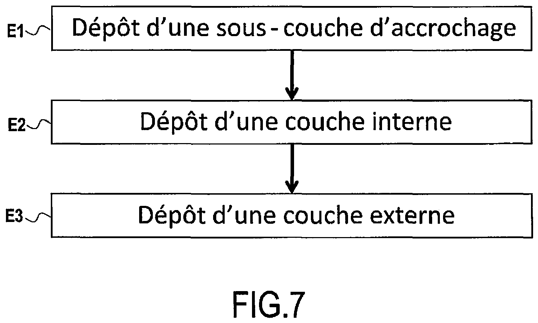

Comme illustré sur la figure 7, selon une mise en œuvre possible, le procédé de fabrication de la pièce 10 comprend les étapes suivantes :
- E1 : dépôt de la sous-couche d'accrochage 30 comprenant du silicium sur la surface S du substrat 20 ;
- E2 dépôt de la couche interne 41 de la barrière environnementale 40 sur la sous-couche d'accrochage 30 ;
- E3 dépôt de la couche externe 42 de la barrière environnementale 40 sur la couche interne 41, ladite couche externe 42 étant en céramique.

Selon une mise en œuvre préférentielle du procédé de fabrication de la pièce 10, le dépôt de la couche interne 41 est réalisé par projection plasma dans laquelle le matériau destiné à former les particules 41p dispersées dans la couche interne 41 est introduit dans le jet de plasma sous la forme d'une suspension en milieu liquide.

Le fait d'introduire le matériau destiné à former les particules 41p dans le jet de plasma sous la forme d'une suspension en milieu liquide permet d'utiliser des particules 41p avec une taille moyenne faible, notamment avec une taille moyenne inférieure à 5µm. En effet, si les particules ne sont pas introduites dans le jet de plasma sous la forme d'une suspension en milieu liquide, par exemple en étant introduire sous la forme d'une poudre, les particules sont susceptibles de rebondir sur le jet de plasma à cause de leur trop faible taille, rendant ainsi difficile le contrôle du dépôt de la couche interne 41.

De plus, l'introduction du matériau destiné à former les particules 41p dans le jet de plasma sous la forme d'une suspension en milieu liquide permet d'utiliser un plus large choix de particules 41p. En effet, certains matériaux, dont notamment le carbure de silicium (SiC), peuvent ne supporter que difficilement l'introduction sous forme d'une poudre dans le jet de plasma et peuvent notamment risquer de se sublimer. Le contrôle du dépôt de la couche interne 41 avec des particules 41p en de tels matériaux, notamment le carbure de silicium (SiC), est donc rendu difficile. L'introduction dans le jet de plasma sous forme d'une suspension des particules 41p en milieu liquide permet de protéger ces matériaux contre le jet de plasma, et permet ainsi de plus facilement contrôler le dépôt de la couche interne 41.

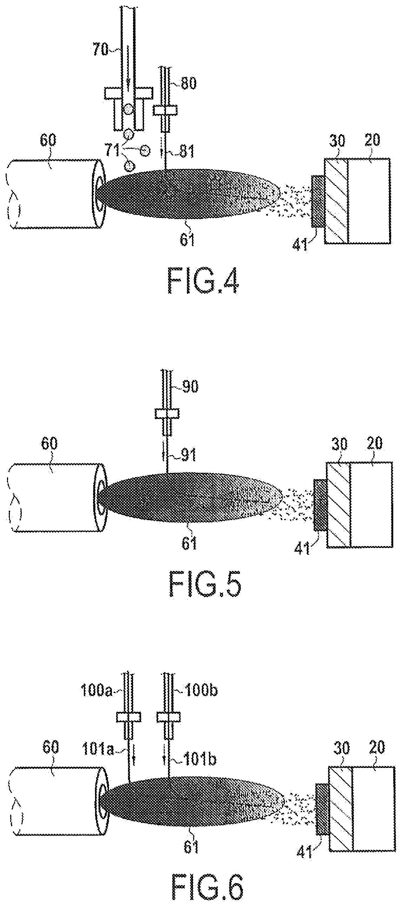

Selon un premier mode de réalisation possible pour le dépôt de la couche interne 41 qui est illustré à la figure 4, ladite couche interne 41 de la barrière environnementale 40 est réalisée par projection plasma à l'aide d'une torche plasma 60 qui génère un jet de plasma 61. La projection plasma peut être réalisée à la pression atmosphérique sous air.

Le matériau destiné à former la matrice 41m de la couche interne 41 est injecté dans le jet de plasma 61 à l'aide d'un injecteur 70 sous la forme d'une poudre 71. La poudre 71 peut, selon un exemple, être une poudre de Y₂Si₂O₇ avec une taille moyenne de 30µm.

Le matériau destiné à former les particules 41p de la couche interne 41 est injecté dans le jet de plasma 61 par un injecteur 80 sous la forme d'une suspension 81 en milieu liquide. La suspension 81 peut être, selon un exemple, une suspension aqueuse chargée à 20% en masse de particules de carbure de silicium (SiC) avec une taille moyenne de 1µm.

Dans l'exemple présenté à la figure 4, une couche interne 41 comprenant une matrice 41m en Y₂Si₂O₇ et des particules de SiC avec une taille moyenne de 1µm est formée sur la sous-couche d'accrochage 30. Le taux de charge volumique de particules 41p est de 30% dans cette couche interne 41, et l'épaisseur E de ladite couche interne est de 150µm.

Selon un deuxième mode de réalisation présenté à la figure 5, le matériau destiné à former la matrice 41m de la couche interne 41 n'est pas injecté dans le jet de plasma sous forme de poudre, mais sous la forme d'une suspension 91 en milieu liquide comprenant à la fois le matériau destiné à former la matrice 41m et le matériau destiné à former les particules 41p. Cette suspension 91 est injectée dans le jet de plasma 61 par un unique injecteur 90.

Selon un exemple, la suspension 91 est une suspension aqueuse chargée à 20% en masse par les matériaux destinés à former la matrice 41m et les particules 41p. La proportion du mélange entre ces deux matériaux est adaptée pour que le taux de charge volumique des particules 41p dans la couche interne 41 soit de 30%. La suspension 91 comprend des particules de Y₂Si₂O₇, avec une taille moyenne de 30µm, qui sont destinées à former la matrice 41m (qui sera donc en Y₂Si₂O₇), et des particules de SiC, avec une taille moyenne de 1µm, et qui sont destinées à former les particules 41p (qui seront donc en SiC). La couche interne 41 formée possède une épaisseur E de 150µm.

Selon un troisième mode de réalisation illustré à la figure 6, le matériau destiné à former la matrice 41m et le matériau destiné à former les particules 41p ne sont pas injectés dans le jet de plasma 61 dans une même suspension, mais en deux suspensions 101a et 101b distinctes.

La première suspension 101a est une suspension aqueuse qui est chargée à 20% en masse de particules de Y₂Si₂O₇ pour former la matrice 41m qui ont une taille moyenne de 5µm. La première suspension 101a est injectée dans le jet de plasma 61 par un premier injecteur 100a.

La deuxième suspension 101b est une suspension aqueuse qui est chargée à 20% en masse de particules de SiC pour former les particules 41p, ces particules ayant une taille moyenne de 1µm. La deuxième suspension 101b est injectée dans le jet de plasma 61 par un deuxième injecteur 100b. La couche interne 41 formée possède une épaisseur E de 150µm.

L'expression « compris(e) entre ... et ... » doit se comprendre comme incluant les bornes.

## Revendications

1. Pièce (10) comprenant :
- un substrat (20) dont au moins une partie adjacente à une surface (S) du substrat est en un matériau comprenant du silicium ;
- une sous-couche d'accrochage (30) située sur la surface (S) du substrat et comprenant du silicium,
- une barrière environnementale (40) qui comprend une couche externe (42) en céramique recouvrant la sous-couche d'accrochage (30), **caractérisée en ce que** ladite barrière environnementale (40) comprend en outre une couche interne (41) auto-cicatrisante située entre la sous-couche d'accrochage (30) et la couche externe (42), ladite couche interne (41) comprenant une matrice (41m) dans laquelle sont dispersées des particules (41p) silico-formeuses, ces particules (41p) étant aptes à générer une phase de cicatrisation de fissures (41f) de la matrice (41m) en présence d'oxygène, la couche interne comprenant un taux de charge volumique de particules (41p) compris entre 20% et 40%.

2. Pièce (10) selon la revendication 1 dans laquelle les particules (41p) de la couche interne (41) comprennent des particules céramiques, préférentiellement des particules de carbure de silicium, ou de nitrure de silicium, ou d'une phase MAX comprenant du silicium, ou un mélange de telles particules.

3. Pièce (10) selon la revendication 1 ou 2 dans laquelle les particules (41p) de la couche interne (41) comprennent des particules métalliques, préférentiellement des particules de silicium élément Si, ou d'un siliciure métallique, ou un mélange de telles particules.

4. Pièce (10) selon l'une quelconque des revendications 1 à 3, dans laquelle les particules de la couche interne ont une taille moyenne inférieure ou égale à 5µm, et préférentiellement inférieure ou égale à 2µm.

5. Pièce (10) selon l'une quelconque des revendications 1 à 4, dans laquelle la couche interne possède une épaisseur comprise entre 10µm et 300µm, et préférentiellement entre 100µm et 200µm.

6. Pièce (10) selon l'une quelconque des revendications 1 à 5, dans laquelle la matrice de la couche interne est en silicate, préférentiellement un monosilicate ou un disilicate de terre rare, ou un aluminosilicate comme la mullite, ou de la cordiérite.

7. Pièce (10) selon l'une quelconque des revendications 1 à 6, dans laquelle la matrice de la couche interne et la couche externe sont formées du même matériau.

8. Procédé de fabrication d'une pièce (10) selon l'une quelconque des revendications 1 à 7, comprenant les étapes suivantes :
- (E1) dépôt de la sous-couche d'accrochage (30) comprenant du silicium sur la surface (S) du substrat (20) ;
- (E2) dépôt de la couche interne (41) de la barrière environnementale (40) sur la sous-couche d'accrochage (30) ;
- (E3) dépôt de la couche externe (42) de la barrière environnementale (40) sur la couche interne (41), ladite couche externe (42) étant en céramique.

9. Procédé selon la revendication 8, dans lequel le dépôt de la couche interne (41) est réalisé par projection plasma dans laquelle un matériau destiné à former les particules est introduit dans un jet de plasma sous la forme d'une suspension en milieu liquide.

## Patentansprüche

1. Komponente (10), umfassend:
- ein Substrat (20), von dem mindestens ein Teil neben einer Oberfläche (S) des Substrats aus einem Material ist, das Silicium umfasst;
- eine Haftunterschicht (30), die sich auf der Oberfläche (S) des Substrats befindet und Silicium umfasst,
- eine Umweltsperre (40), die eine äußere Schicht (42) aus Keramik umfasst, die die Haftunterschicht (30) bedeckt,
**dadurch gekennzeichnet, dass** die Umweltsperre (40) ferner eine selbstheilende innere Schicht (41) umfasst, die sich zwischen der Haftunterschicht (30) und der äußeren Schicht (42) befindet, wobei die innere Schicht (41) eine Matrix (41m) umfasst, in der siliciumformende Partikel (41p) verteilt sind, wobei diese Partikel (41p) imstande sind, eine rissheilende Phase (41f) der Matrix (41m) bei Anwesenheit von Sauerstoff zu erzeugen, wobei die innere Schicht eine Volumenbesatzrate mit Partikeln (41p) zwischen 20% und 40% umfasst.

2. Komponente (10) nach Anspruch 1, wobei die Partikel (41p) der inneren Schicht (41) Keramikpartikel, vorzugsweise Partikel aus Siliciumcarbid oder aus Siliciumnitrid oder aus einer MAX-Phase, die Silicium umfasst, oder ein Gemisch derartiger Partikel umfassen.

3. Komponente (10) nach Anspruch 1 oder 2, wobei die Partikel (41p) der inneren Schicht (41) Metallpartikel, vorzugsweise Partikel aus Silicium Element Si, oder aus einem Metallsilicid oder ein Gemisch derartiger Partikel umfassen.

4. Komponente (10) nach einem der Ansprüche 1 bis 3, wobei die Partikel der inneren Schicht eine mittlere Größe kleiner oder gleich 5 µm und vorzugsweise kleiner oder gleich 2 µm haben.

5. Komponente (10) nach einem der Ansprüche 1 bis 4, wobei die innere Schicht eine Dicke zwischen 10 µm und 300 µm und vorzugsweise zwischen 100 µm und 200 µm besitzt.

6. Komponente (10) nach einem der Ansprüche 1 bis 5, wobei die Matrix der inneren Schicht aus Silikat ist, vorzugsweise einem Selten-Erde-Monosilikat oder -Disilikat, oder einem Aluminosilikat wie Mullit, oder Cordierit.

7. Komponente (10) nach einem der Ansprüche 1 bis 6, wobei die Matrix der inneren Schicht und der äußeren Schicht aus demselben Material gebildet sind.

8. Verfahren zur Herstellung einer Komponente (10) nach einem der Ansprüche 1 bis 7, das die folgenden Schritte umfasst:
- (E1) Aufbringen der Haftunterschicht (30), die Silicium umfasst, auf die Oberfläche (S) des Substrats (20);
- (E2) Aufbringen der inneren Schicht (41) der Umweltsperre (40) auf die Haftunterschicht (30);
- (E3) Aufbringen der äußeren Schicht (42) der Umweltsperre (40) auf die innere Schicht (41), wobei die äußere Schicht (42) aus Keramik ist.

9. Verfahren nach Anspruch 8, wobei das Aufbringen der inneren Schicht (41) durch Plasmaprojektion durchgeführt wird, wobei ein Material, das bestimmt ist, die Partikel zu bilden, in einen Plasmastrahl in Form eine Suspension in flüssigem Medium eingebracht wird.

## Claims

1. A component (10) consisting of:
- a substrate (20) at least a portion of which adjacent to a surface (S) of the substrate is made of a material comprising silicon;
- a bond coat (30) located on the surface (S) of the substrate and comprising silicon,
- an environmental barrier (40) which comprises an outer layer (42) of ceramic material covering the bond coat (30),
**characterized in that** said environmental barrier (40) further comprises a self-healing inner layer (41) located between the bond coat (30) and the outer layer (42), said inner layer (41) comprising a matrix (41m) in which silico-forming particles (41p) are dispersed, these particles (41p) being capable of generating a healing phase for cracks (41f) in the matrix (41m) in the presence of oxygen, the inner layer comprising a volume charge rate of the particles (41p) of between 20% and 40%.

2. The component (10) as claimed in claim 1 wherein the particles (41p) of the inner layer (41) comprise ceramic particles, preferably particles of silicon carbide, or silicon nitride, or of a MAX phase comprising silicon, or a mixture of such particles.

3. The component (10) as claimed in claim 1 or 2 wherein the particles (41p) of the inner layer (41) comprise metal particles, preferably particles of elemental silicon Si, or of a metal silicide, or a mixture of such particles.

4. The component (10) as claimed in any one of claims 1 to 3, wherein the particles of the inner layer have an average particle size less than or equal to 5 µm, and preferentially less than or equal to 2 µm.

5. The component (10) as claimed in any one of claims 1 to 4, wherein the inner layer has a thickness of between 10 µm and 300 µm, and preferentially between 100 µm and 200 µm.

6. The component (10) as claimed in any one of claims 1 to 5, wherein the matrix of the inner layer is of silicate, preferably a rare earth monosilicate or disilicate, or an aluminosilicate such as mullite, or cordierite.

7. The component (10) as claimed in any one of claims 1 to 6, wherein the matrix of the inner layer and the outer layer are formed of the same material.

8. A process for manufacturing a component (10) as claimed in any one of claims 1 to 7, comprising the following steps:
- (S1) deposition of the bond coat (30) comprising silicon on the surface (S) of the substrate (20);
- (S2) deposition of the inner layer (41) of the environmental barrier (40) on the bond coat (30);
- (S3) deposition of the outer layer (42) of the environmental barrier (40) on the inner layer (41), said outer layer (42) being ceramic.

9. The process as claimed in claim 8, wherein the deposition of the inner layer (41) is carried out by plasma spraying in which a material for forming the particles is introduced into a plasma jet in the form of a suspension in a liquid medium.
